# EUROPÄISCHE PATENTSCHRIFT

(11) **EP 0 435 067 B1**
(45) Veröffentlichungstag und Bekanntmachung des Hinweises auf die Patenterteilung: **16.02.1994**
(21) Anmeldenummer: 90123892.3
(22) Anmeldetag: 12.12.1990
(51) Int. Cl.: F16L 5/02, H02G 3/22

(54) **Mauerdurchführung für Rohre, Kabel oder Leitungen**
Wall feed-through for pipes, cables or conduits
Traversée de mur pour tuyaux, câbles ou conduites

(30) Priorität: 28.12.1989 DE 8915213 U
(43) Veröffentlichungstag der Anmeldung: 03.07.1991
(73) Patentinhaber: REHAU AG + Co, 95111 Rehau (DE)
(72) Erfinder:

(56) Entgegenhaltungen:
- DE-A- 3 702 443
- DE-U- 8 714 835
- DE-U- 8 914 584
- US-A- 4 021 604

## Beschreibung

Die Neuerung betrifft eine Mauerdurchführung für Rohre, Kabel oder Leitungen, bestehend aus wenigstens einem in den Mauerdurchbruch einsetzbaren hohlen Bauteil, wobei dieses Bauteil an seinen freien Enden sich an der Bauwerkswandung abstützende Verschlußelemente aufweist und gegen das Mauerwerk im Durchführungsbereich abgedichtet ist, wobei das hohle Bauteil ein Wellrohr ist und die Verschlußelemente als zum Mauerwerk hin divergierende, einen Hohlraum über dem Wellrohr einschließende Deckelteile sind, welche zum Wellrohr hin einstückig angeformte, rohrförmige Hüllstücke aufweisen, aus deren lichter Weite Rastfüße zum Abstützen der Deckelteile in den zugeordneten Wellungen des Wellrohres abragen.

Mauerdurchführungen dieser Art sind in vielerlei Ausführungsformen bekannt. Stellvertretend sei hier auf die DE-OS 36 29 140 verwiesen. Für die dort beschriebene Durchführung von Kabeln, Rohren oder Leitungen durch ein Mauerwerk wird zunächst ein Mauerdurchbruch durch dieses Mauerwerk hergestellt. In diesen Mauerdurchbruch wird das die Mauerdurchführung bildende Bauteil eingesetzt, welches aus zwei Hohlkörpern besteht. Beide Hohlkörper sind durch eine Schraubenfeder miteinander verbunden, die ihrerseits durch einen Schrumpfschlauch nach außen abgedeckt ist, wobei der Schrumpfschlauch an Wandbereichen der Hohlkörper befestigt, z.B. verklebt ist. Der Schrumpfschlauch wird danach auf die gespannte Schraubenfeder aufgeschrumpft, so daß die Schrumpfschlauchwandung in die Bereiche zwischen zwei Wendeln der Schraubenfeder eindringen kann. Auf diese Weise kann sich der Schrumpfschlauch nach Art eines Kompensators ausdehnen, sobald sich die Schraubenfeder zwischen den beiden Hohlkörpern ausdehnt.

Beide Hohlkörper besitzen bei der bekannten Ausführungsart einen den Durchmesser der Hohlkörper überragenden Kragen, mit dem sich die Mauerdurchführung im Endsitz an den zugeordneten Wandbereichen des Mauerwerks abstützt.

Hierbei können zwischen dem Kragen und dem Mauerwerk Dichtungsmittel angeordnet sein, welche eine zusätzliche Abdichtung der Maueröffnung bei eingesetzter Mauerdurchführung bewirken.

Vor der Verbringung der bekannten Mauerdurchführung in den Endsitz, d.h. vor dem Spannen der Schraubenfeder zwischen den beiden Hohlkörpern kann in die verbleibende Maueröffnung ein Dichtungsmittel, z.B. eine dauerelastische oder dauerplastische Masse eingefüllt werden. Diese Masse befindet sich dann in dem Ringspalt zwischen dem Mauerdurchbruch, den Hohlkörpern und dem Schrumpfschlauch über der Schraubenfeder. Wird die gespannte Schraubenfeder danach entspannt, d.h. zieht sich die Schraubenfeder zusammen und verpreßt die an den Hohlkörper befindlichen Kragen an den zugeordneten Flächen des Mauerwerks, bewirkt dieses Zusammenziehen auch ein Verpressen der dauerelastischen bzw. dauerplastischen Masse in Ringspalt zwischen dem Mauerdurchbruch und der Außenoberfläche der Mauerdurchführung. Damit wird eine elastische Abdichtung der Mauerdurchführung in der Maueröffnung erzielt.

Der Nachteil der bekannten Vorrichtungen dieser Art wird darin gesehen, daß die zum Aufbau der Mauerdurchführung verwendeten hohlen Bauteile sind, die jeweils einer bestimmten Mauerdicke entsprechen. So benötigt man für dickere Mauern andere Formteile als für dünnere Mauern und umgekehrt. Darüberhinaus enden diese Formteile mit einem kurzen Überstand über das Mauerwerk. An diesem Überstand können dann die weiterführenden Leitungen angeordnet werden.

Nach der DE-U 8714 835 ist eine Mauerdurchführung für Rohre, Kabel oder Leitungen bekannt, bestehend aus wenigstens einem in den Mauerdurchbruch einsetzbaren hohlen Bauteil, wobei dieses Bauteil an seinen freien Enden sich and er Bauwerkswandung abstützende Verschlußelemente aufweist und gegen das Mauerwerk im Durchführungsbereich abgedichtet ist (sh. Dichtungen 7).

Das hohle Bauteil ist ein Wellrohr 4 und die Verschlußelemente sind als zum Mauerwerk hin divergierende, einen Hohlraum über dem Wellrohr einschließende Deckelteile ausgebildet, welche zum Wellrohr hin einstückig angeformte, rohrförmige Hüllstücke aufweisen, aus deren lichter Weite Rastfüße zum Abstützen der Deckelteile in den zugeordneten Wellungen des Wellrohres abragen.

Gegenüber diesem Stand der Technik hat sich die Neuerung die Aufgabe gestellt, einen einfachen Aufbau für eine Mauerdurchführung zu schaffen, welcher für alle Mauerdicken verwendet werden kann und bei dem darüberhinaus die Länge des Durchführungsrohres im Anschluß an das Mauerwerk frei gewählt werden kann. Neuerungsgemäß wird dazu vorgeschlagen, daß die Deckelteile auf dem Wellrohr verschieblich angeordnet sind, und daß wenigstens eines der rohrförmigen Hüllstücke über das Deckelteil hinaus axial verlängert ist und an seinem freien Ende ein Außengewinde trägt, an dem ein in seinem Inneren einen Dichtring tragendes Schraubelement festlegbar ist.

Zweckmäßigerweise ist wenigstens eines der rohrförmigen Hüllstücke über das Deckelteil hinaus axial verlängert und trägt an seinem freien Ende ein Außengewinde, an dem ein in seinem Inneren einen Dichtring tragendes Schraubelement festlegbar ist. In dieses Schraubelement kann vorteilhaft ein mit den zugeordneten Wellungen des Wellrohres zusammenwirkendes Sperrelement eingesetzt sein.

Die Länge des Wellrohres kann nach innen wie nach außen frei wählbar und mit den freien Enden des Wellrohres können wahlweise Mehrfacheinführungen, Anschlußelemente und dergleichen verbindbar sein.

Der Vorteil der neuerungsgemäßen Mauerdurchführung wird darin gesehen, daß der Aufbau mit dem Wellrohr und dem auf den Wellungen verrastbaren Deckelteilen einfach durchführbar ist.

Der besondere Vorteil liegt jedoch darin, daß die neuerungsgemäße Mauerdurchführung unabhängig ist von der Dicke des Mauerwerks und die Länge des Wellrohres nach innen wie nach außen frei wählbar ist. Auf diese Weise kann das Wellrohr nach innen wie nach außen über den Bereich der Mauerdurchführung hinaus als Schutzrohr für die eingezogenen Kabel weitergeführt werden. Da das Wellrohr von der Rolle abgenommen wird, treten Längenbeschränkungen im für solche Montagen vorgesehenen Rahmen nicht in Betracht.

In der Zeichnung sind Ausführungsbeispiele der neuerungsgemäßen Mauerdurchführung schematisch dargestellt; es zeigen:
Fig.1 ein Beispiel einer Mauerdurchführung mit zwei auf dem Wellrohr verrasteten Deckelteilen (nicht vom Anspruch 1 gedecht) und
Fig.2 eine Mauerdurchführung nach der Erfindung mit im Zentrum der Deckelteile angeformten Hüllstücken und einer Schraubsicherung an einem freien Ende eines Hüllstückes.

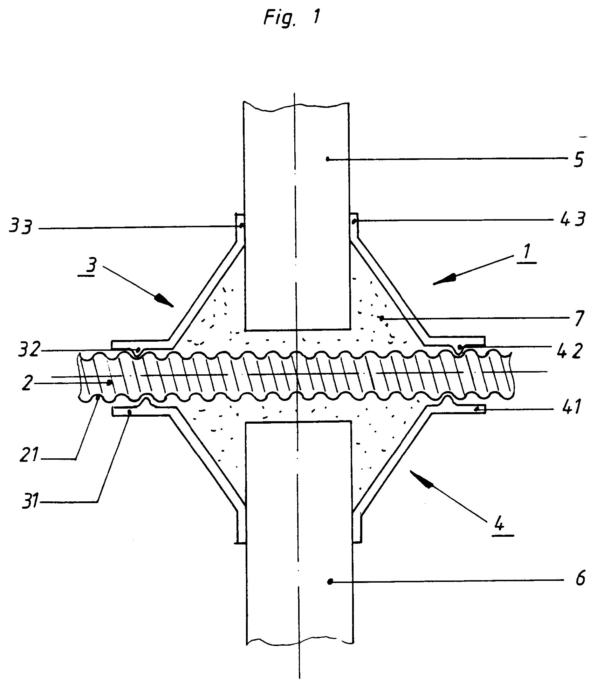

Die in Fig.1 gezeigte Mauerdurchführung 1 zeigt das Wellrohr 2 und die Deckelteile 3, 4, welche zum Mauerwerk 5, 6 hin divergieren und über dem Wellrohr 2 einen Hohlraum 7 einschließen. Die Deckelteile 3, 4 sind auf dem Wellrohr 1 zum Mauerwerk 5, 6 hin verschieblich angeordnet. In der gezeigten Darstellung ragen von einem kurzen zentrischen Rohrstück 31, 41 der Deckelteile 3,4 nach innen zum Wellrohr kurze Rastfüße 32, 42 ab, welche in Form einzelner Erhöhungen am inneren Umfang der konzentrischen Rohrstücke 31, 41 einstückig ausgeformt oder als umlaufende Raste dort angeordnet sein können. Die Rastfüße 32, 42 stützen sich im gezeigten Endsitz der Deckelteile 3, 4 in den Wellungen 21, des Wellrohres 2 rastend ab.

Die Darstellung zeigt ein spiralgewelltes Wellrohr, bei dem die Rastfüße 32, 42 an den Deckelteilen 3, 4 dieser Spiralwellung entsprechend am inneren Umfang der konzentrischen Rohrstücke 31, 41 angeformt sind.

Die Rastfüße 32, 42 sind dabei in einem Winkel an den inneren Umfang der konzentrischen Rohrstücke angeformt, der ein unter Spannung stehendes Überschieben der einzelnen Wellungen 21 des Wellrohres 2 erlaubt. Sobald die mauerwerkseitigen Ränder 33, 43 der Deckelteile 3, 4 am Mauerwerk anliegen, endet der Aufschiebprozess. Zwischen den Rändern 33, 43 der Deckelteile 3, 4 und dem Mauerwerk 5, 6 können beliebig geformte Dichtungen als Dichtstreifen, Dichtschnüre und dergleichen eingebracht sein. Die Rastfüße 32, 42 stützen sich nunmehr in den zugeordneten Wellungen 21 des Wellrohres 2 ab und verhindern damit ein Abziehen der Deckelteile 3, 4 aus dem eingenommenen Endsitz.

In den Hohlraum 7 zwischen der Oberfläche des Wellrohres 2 und den inneren Umfangsflächen der Deckelteile 3, 4 kann nunmehr noch ein geeignetes plastisches oder elastisches Dichtmittel z.B. durch eine in der Zeichnung nicht dargestellte Öffnung eines Deckelteils 3, 4 eingebracht werden. Dieses Dichtmittel kann auch bereits vor dem rastenden Zusammenschieben der beiden Deckelteile 3, 4 in deren schalenförmigen Innenraum sowie in den Mauerdurchbruch über dem Wellrohr 2 eingebracht werden. Durch das Zusammenschieben der beiden Deckelteile 3, 4 bis zu ihrem rastenden und abdichtenden Endsitz wird dann dieses Dichtmittel im Hohlraum 7 verpresst und auf diese Weise eine Abdichtung der Mauerdurchführung erzielt.

Anstelle des gezeigten spiralgewellten Wellrohres 2 kann selbstverständlich auch ein ringgewelltes Wellrohr 2 zur Herstellung der Mauerdurchführung verwendet werden. In diesem Fall sind die Rastfüße 32, 42 vorzugsweise ringförmig am inneren Umfang der konzentrischen Endbereiche 31, 41 der Deckel 3, 4 angeordnet.

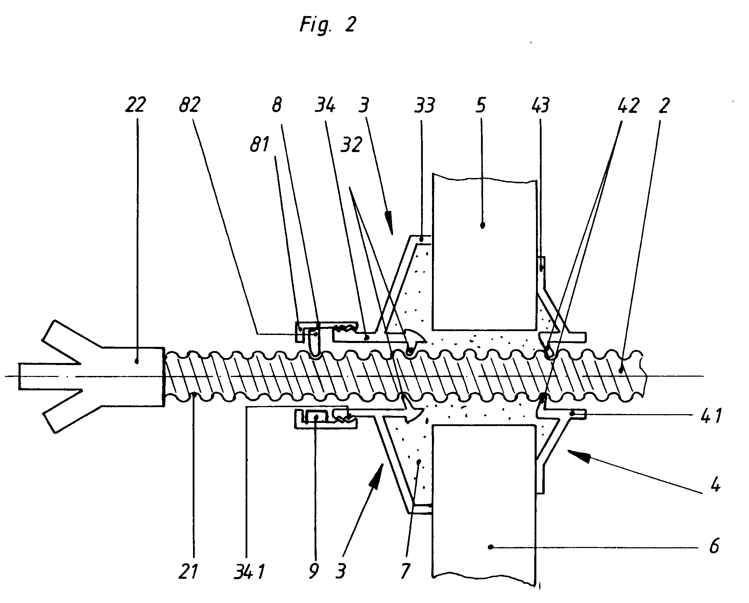

Fig.2 zeigt die Mauerdurchführung mit im Zentrum des Deckelteils 3 angeformtem rohrförmigen Hüllstück 34, welches an seinem äußeren freien Ende ein Außengewinde 341 trägt. Auf dieses Außengewinde 341 ist ein mit Innengewinde versehenes Schraubelement 8 aufgeschraubt. Das Schraubelement 8 weist an seinem freiliegenden Ende eine rundumlaufende Einschnürung 81 auf.

Zwischen dieser Einschnürung 81 und dem freiliegenden Querschnittsende des rohrförmigen Hüllstücks 34 ist eine Aufnahmekammer für den Dichtring 9 geschaffen. Der Dichtring 9 wird durch das Aufschrauben des Schraubelementes 8 auf das Außengewinde 341 des rohrförmigen Hüllstücks 34 über den Wellungen 21 des Wellrohres 2 verpresst und schafft damit eine sichere Abdichtung des Hohlraums 7 gegen die Außenatmosphäre. Auf diese Weise wird auch ein Auslaufen des plastischen oder elastischen Dichtmittels, welches in den Hohlraum 7 während oder nach Herstellung der Mauerdurchführung eingepresst wird, vermieden. In die Aufnahmekammer für den Dichtring 9 kann zusätzlich ein Sperrelement 82 eingesetzt sein, welches sich an den zugeordneten Wellungen 21 des Wellrohres 2 abstützt und damit die Unverschieblichkeit der Deckelteile 3, 4 in ihrem Endsitz unterstützt bzw. garantiert.

Am gezeigten freien Ende des Wellrohres 2 ist eine Mehrfacheinführung 2 dargestellt, die beispielsweise als Schrumpfelement gas- und wasserdicht auf den äußeren Umfang des freien Endes des Wellrohres 2 aufgebracht sein kann.

## Patentansprüche

1. Mauerdurchführung für Rohre, Kabel oder Leitungen, bestehend aus wenigstens einem in den Mauerdurchbruch einsetzbaren hohlen Bauteil, wobei dieses Bauteil an seinen freien Enden sich an der Bauwerkswandung abstützende Verschlußelemente aufweist und gegen das Mauerwerk im Durchführungsbereich abgedichtet ist, wobei das hohle Bauteil ein Wellrohr (2) ist und die Verschlußelemente als zum Mauerwerk hin divergierende, einen Hohlraum (7) über dem Wellrohr (2) einschließende Deckelteile (3, 4) sind, welche zum Wellrohr (2) hin einstückig angeformte, rohrförmige Hüllstücke (31, 41) aufweisen, aus deren lichter Weite Rastfüße (32, 42) zum Abstützen der Deckelteile (3, 4) in den zugeordneten Wellungen (21) des Wellrohres (2) abragen, dadurch gekennzeichnet, daß die Deckelteile (3, 4) auf dem Wellrohr (2) verschieblich angeordnet sina, und daß wenigstens eines der ronrförmigen Hüllstücke (34) über das Deckelteil (3) hinaus axial verlängert ist und an seinem freien Ende ein Außengewinde (341) trägt, an dem ein in seinem Inneren einen Dichtring (9) tragendes Schraubelement (8) festlegbar ist.

2. Mauerdurchführung nach Anspruch 1, dadurch gekennzeichnet, daß in das Schraubelement (8) ein mit den zugeordneten Wellungen (21) des Wellrohres (2) zusammenwirkendes Sperrelement (82) eingesetzt ist.

3. Mauerdurchführung nach Anspruch 1, dadurch gekennzeichnet, daß die Länge des Wellrohres (2) nach innen wie nach außen frei wählbar ist, und daß mit den freien Enden wahlweise Mehrfacheinführungen, Anschlußelemente (22) verbindbar sind.

## Claims

1. Wall duct for pipes, cables or wires comprising at least one hollow component for insertion into the wall opening, this component exhibiting at its unattached ends closure elements resting against the wall surface to form a tight seal at the point of wall penetration, whereby the hollow component takes the form of a currugated tube (2) and the closure elements are designed as cover sections (3, 4) which diverge towards the building structure to enclose a void (7) over the currugated tube (2) and which feature sleeve pieces (31, 41) moulded on in one piece to the corrugated tube (2) from the clear inside diameter of which project engagement feet (32, 42) for supporting the cover sections (3, 4) in the opposing corrugations (21) of the corrugated tube (2), characterised by the fact that the cover sections (3, 4) are arranged so as to move on the corrugated tube (2) and that at least one of the tubular sleeve pieces (34) extends axially beyond the cover section (3) and features at its unattached end an external thread (341) to which can be connected a screw-fastening element (8) the inside of which bears an internal sealing ring (9).

2. Wall duct as described in claim 1, characterised by the fact that a blocking element (82) interacting with the opposing corrugations (21) of the corrugated tube (2) is inserted into the screw-fastening element (8).

3. Wall duct as described in claim 1, characterised by the fact that the length of the corrugated tube (2) on the inside and outside can be freely selected and that multiple ductings or connection elements (22) can be joined to the unattached ends.

## Revendications

1. Pièce de traversée de mur pour tubes, câbles ou conduites, constituée d'au moins un élément creux pouvant être inséré dans le percement du mur; cet élément présente à ses extrémités libres des éléments de fermeture qui s'appuient sur la paroi de la maçonnerie et il est étanche par rapport à la maçonnerie dans la zone de la traversée; l'élément creux est un tube ondulé (2) et les éléments de fermeture sont des chapeaux (3, 4) qui s'écartent vers la maçonnerie, ils englobent un volume creux (7) au-dessus du tube ondulé (2) et présentent des gaines tubulaires (32, 42) d'une seule pièce épousant la forme du tube ondulé (2); des crans (32, 42) dépassant du diamètre intérieur des gaines servent à bloquer les chapeaux (3, 4) dans les ondulations (21) du tube ondulé (2); la pièce de traversée de mur est caractérisée par le fait que les chapeaux (3, 4) peuvent glisser sur le tube ondulé (2) et qu'au moins une des gaines tubulaires (34) est prolongée axialement au-delà du chapeau (3) et présente un filetage extérieur (341) à son extrémité libre sur lequel on peut fixer un raccord (8) renfermant une bague d'étanchéité (8).

2. Pièce de traversée de mur selon la revendication 1, caractérisée par le fait qu'un élément de blocage (82) concourant avec les ondulations (21) du tube ondulé (2) est inséré dans le raccord (8).

3. Pièce de traversée de mur selon la revendication 1, caractérisée par le fait que la longueur du tube ondulé (2) peut être choisie librement vers l'intérieur et vers l'extérieur et que des raccords quelconques (22) peuvent être montés sur les extrémités libres.
